# EUROPÄISCHE PATENTSCHRIFT

(11) **EP 4 488 617 B1**
(45) Veröffentlichungstag und Bekanntmachung des Hinweises auf die Patenterteilung: **10.06.2026**
(21) Anmeldenummer: 24170251.3
(22) Anmeldetag: 15.04.2024
(51) Int. Cl.: G01B 11/00, G01B 11/26, G01S 3/782, G01S 3/783, G01S 5/16, G01D 5/347

(54) **OPTISCHE EMPFANGSEINHEIT**
OPTICAL RECEIVING UNIT
UNITÉ DE RÉCEPTION OPTIQUE

(30) Priorität: 03.07.2023 DE 102023206288
(43) Veröffentlichungstag der Anmeldung: 08.01.2025
(73) Patentinhaber: Dr. Johannes Heidenhain GmbH, 83301 Traunreut (DE)
(72) Erfinder: SPECKBACHER, Dr. Peter, 84558 Kirchweidach (DE); SEDLMEIER, Wolfang, 83119 Obing (DE)

(56) Entgegenhaltungen:
- EP-B1- 2 063 231
- DE-A1- 102021 209 393

## Beschreibung

### GEBIET DER TECHNIK

Die Erfindung betrifft eine optische Empfangseinheit, die in einem Positionsmesssystem zur Bestimmung räumlicher Positionsinformationen genutzt werden kann.

### STAND DER TECHNIK

Aus der WO 01/38828 A1 ist ein optisches Positionsmesssystem bekannt, das als räumliches 2D-Winkelmesssystem ausgebildet ist und zur Bestimmung räumlicher Positionsinformationen genutzt werden kann. Dieses umfasst einerseits eine Sendeeinheit, die an einem im Raum beweglichen Messobjekt angeordnet ist, dessen räumliche Position und Orientierung, d. h. dessen Pose zu bestimmen ist; als Sendeeinheit kann z.B. eine geeignete Lichtquelle fungieren. Stationär gegenüber der beweglichen Sendeeinheit sind andererseits ein oder mehrere optische Empfangseinheiten vorgesehen, die im Wesentlichen jeweils ein Abtastgitter sowie einen optoelektronischen Detektor aufweisen; weitere Details zu einem geeigneten Aufbau der Empfangseinheiten sind der genannten Druckschrift nicht zu entnehmen. Mit Hilfe eines derartigen Systems kann über eine sogenannte Multiangulation die Pose der Sendeeinheit im Raum bestimmt werden. Hierzu wird von der jeweiligen Empfangseinheit aus gesehen die Richtung der Sichtlinie zur Sendeeinheit über zwei Winkelmessungen bestimmt. Bei einer bekannten Relativposition zweier Empfangseinheiten lässt sich aus dem Schnittpunkt der bestimmten Sichtlinien die Pose der Sendeeinheit ermitteln. Hinsichtlich weiterer Einzelheiten eines derartigen Messprinzips sei ausdrücklich auf die genannte Druckschrift verwiesen.

Ein geeigneter Aufbau einer optischen Empfangseinheit für ein solches Messsystem ist aus der DE 10 2021 209 393 A1 bekannt. Diese besteht aus einer in einem Montagegehäuse angeordneten Messzelle mit einer Bodenplatte, auf der ein Detektor angeordnet ist; über Abstandshalter ist in einer bestimmten Distanz vom Detektor beabstandet eine Deckplatte mit einem Abtastgitter vorgesehen. Ein darüber angeordnetes transparentes Abdeckelement schützt den Innenraum der Messzelle gegenüber Verunreinigungen. Hinsichtlich geeigneter Maßnahmen zur Verringerung störender Einflüsse auf die zu erzeugenden Messsignale offenbart diese Druckschrift keine weiteren Einzelheiten.

Eine optische Empfangseinheit nach dem Oberbegriff des Anspruchs 1 ist auch aus der Patentschrift EP 2 063 231 B1 bekannt.

### ZUSAMMENFASSUNG DER ERFINDUNG

Der vorliegenden Erfindung liegt die Aufgabe zugrunde, eine optische Empfangseinheit für ein Positionsmesssystem zur Bestimmung räumlicher Positionsinformationen anzugeben, bei der störende Einflüsse auf die zu erzeugenden Messsignale möglichst weitgehend minimiert sind.

Diese Aufgabe wird erfindungsgemäß durch eine optische Empfangseinheit mit den Merkmalen des Anspruches 1 gelöst. Vorteilhafte Ausgestaltungen und Weiterbildungen sind in den jeweils abhängigen Ansprüchen angegeben.

Die erfindungsgemäße optische Empfangseinheit kann in einem Positionsmesssystem zur Bestimmung räumlicher Positionsinformationen genutzt werden. Sie weist eine Messzelle auf, die ein Abtastgitter und einen optoelektronischen Detektor umfasst, dessen lichtempfindliche Fläche in Richtung des Abtastgitters orientiert ist. Die Messzelle ist in einem Montagegehäuse angeordnet, welches im Bereich des Abtastgitters ein für eine Messwellenlänge transparentes Abdeckelement aufweist. Das Abdeckelement umfasst ein Trägersubstrat mit gegenüberliegenden Seitenflächen. Das Abdeckelement umfasst mindestens eine Leitschicht, die elektrisch leitend an das Montagegehäuse angebunden ist. Das Abdeckelement weist noch mindestens eine Antireflexschicht auf, wobei die Leitschicht zwischen dem Trägersubstrat und der Antireflexschicht angeordnet ist

Über eine derartige Ausbildung des Abdeckelements kann zuverlässig sichergestellt werden, dass eine elektromagnetische Abschirmung gegenüber elektromagnetischer Störstrahlung erreicht wird.

Mit Vorteil ist vorgesehen, dass auf beiden Seitenflächen des Trägersubstrats zumindest eine Leitschicht und zumindest eine Antireflexschicht flächig aufgetragen sind.

Mit Hilfe der Antireflexschicht kann weiterhin das Signal-Rausch-Verhältnis in den erzeugten Messsignalen optimiert werden, da darüber der störende Einfluss von Streulicht deutlich minimierbar ist.

In einer bevorzugten Ausführung der erfindungsgemäßen optischen Empfangseinheit besteht das Trägersubstrat des Abdeckelements aus einer vorzugsweise 0,7 mm bis 7 mm dicken Filterglasscheibe. Diese Scheibe kann sowohl gehärtet als auch ungehärtet oder teilgehärtet, klar oder strukturiert sowie eingefärbt und damit halbtransparent oder intransparent für vorbestimmte Wellenlängenbereiche sein.

Es ist dabei möglich, dass über ein Kontaktierungselement eine leitende Verbindung zwischen der Leitschicht der ersten Seitenfläche und der Leitschicht der zweiten Seitenfläche besteht.

Vorzugsweise ist die Leitschicht als elektrisch leitfähiges Oxid (TCO) ausgebildet, das bezüglich der für die Messung genutzten elektromagnetischen Strahlung transparent ist.

Mit Vorteil ist das elektrisch leitfähige Oxid aluminiumdotiertes Zinkoxid (ZnO:Al) oder Indiumzinnoxid (ITO).

Die Leitschicht kann mittels eines Dünnschicht-Verfahrens auf das Trägersubstrat aufgebracht werden, z. B. durch ein Sputter-Verfahren
Vorzugsweise umfasst die Antireflexschicht zumindest eine erste und zweite Teilschicht, wobei
- die erste Teilschicht Siliziumdioxid (SiO₂) umfasst und
- die zweite Teilschicht Silizium (Si) oder Tantalpentoxid (Ta₂O₅) umfasst.

Die erste und zweite Teilschicht der Antireflexschicht können ebenso mittels eines Verfahrens der Dünnschichttechnik aufgetragen werden.

Mit Vorteil ist das Abdeckelement derart ausgebildet, dass zumindest ein Teilabschnitt des Kontaktierungselements zwischen der Leitschicht und der Antireflexschicht angeordnet ist.

Als vorteilhaft erweist sich dabei, wenn die Schichtdicken der Leitschicht und ergänzend oder alternativ der Antireflexschicht derart ausgebildet sind, dass bezüglich der für die Messung genutzten elektromagnetischen Strahlung ein Reflexminimum sowie eine maximale Transmission für Einstrahlwinkel zwischen 0° bis 50°, bezüglich einer senkrecht zu einer Symmetrieebene des Trägersubstrats verlaufenden Achse, resultiert.

Ferner kann vorgesehen sein, dass die Leitschicht direkt auf dem Trägersubstrat aufgetragen ist.

Eine optische Kittschicht zwischen dem Trägersubstrat und der Leitschicht oder der Leitschicht und der Antireflexschicht ist nicht notwendig.

Vorzugsweise ist das Kontaktierungselement um das Abdeckelement umlaufend ausgebildet.

Es ist möglich, dass das Kontaktierungselement aus einer Aluminium-Chrom-Legierung (AlCr) oder einem Aluminium-Titan-Gold-Stapel (AlTiAu) besteht.

Wird ein gegen Umwelteinflüsse besonders stabiles Kontaktelement benötigt, kann hierfür insbesondere ein Aluminium-Titan-Gold-Stapel verwendet werden.

Mit Vorteil ist das Abdeckelement über das Kontaktierungselement an das Montagegehäuse durch eine elektrisch leitfähige Kleb- oder Lötverbindung angebunden.

In einer vorteilhaften Ausführungsform kann das Trägersubstrat lediglich für Wellenlängen größer als 780 nm durchlässig ausgebildet sein.

Vorzugsweise ist das Abdeckelement hinsichtlich der Symmetrieebene des Trägersubstrats streng symmetrisch ausgebildet.

Die Erfindung wird nachstehend auch hinsichtlich weiterer Merkmale und Vorteile anhand der Beschreibung von Ausführungsbeispielen und unter Bezugnahme auf die beiliegenden, schematischen Zeichnungen näher erläutert.

### KURZE BESCHREIBUNG DER ZEICHNUNGEN

- Fig. 1: eine schematische Darstellung eines Positionsmesssystems zur Bestimmung räumlicher Positionsinformationen, in dem mehrere erfindungsgemäße optische Empfangseinheiten verwendet werden;
- Fig. 2: eine Schnittansicht eines Ausführungsbeispiels der erfindungsgemäßen optischen Empfangseinheit;
- Fig. 3: eine Schnittansicht des transparenten Abdeckelements aus der Messzelle der optischen Empfangseinheit aus Fig. 2;
- Fig. 4: ein Ausschnitt des transparenten Abdeckelements aus Fig. 3 in einer Detailansicht;
- Fig. 5: ein Ausschnitt des in einer Messzelle verbauten transparenten Abdeckelements in einer Detailansicht.

### BESCHREIBUNG DER AUSFÜHRUNGSFORMEN

Einige spezifische Ausführungsformen der vorliegenden Erfindung werden im Folgenden unter Bezugnahme der Zeichnungen genauer beschrieben.

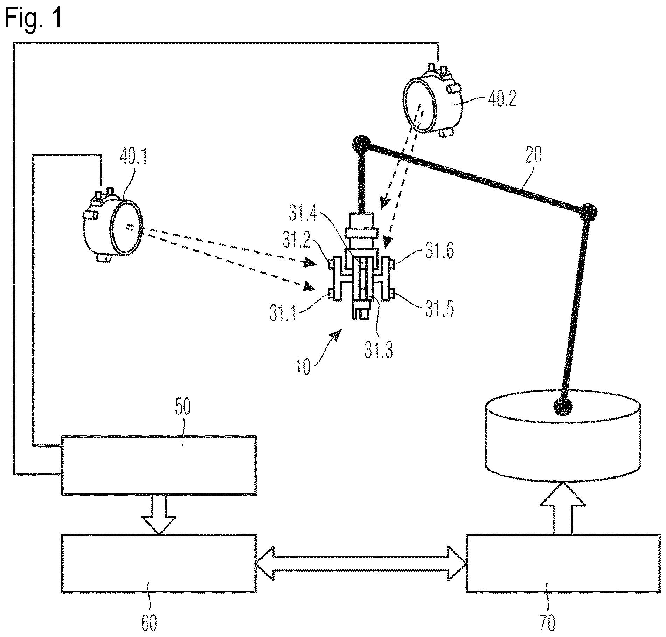

In Fig. 1 ist in stark schematisierter Form ein optisches Positionsmesssystem dargestellt, das zur Bestimmung räumlicher Positionsinformationen bzw. zur Bestimmung der Position und Orientierung eines im Raum beweglichen Messobjekts geeignet ist; nachfolgend sei diesbezüglich auch von der Pose des Messobjekts die Rede. Im vorliegenden Beispiel ist als Messobjekt ein Messkopf 10 vorgesehen, der über eine lediglich schematisiert angedeutete Kinematik 20 im Raum positionierbar ist und dessen Pose mit Hilfe des optischen Positionsmesssystems bestimmt wird. Als Messkopf 10 kann z. B. ein bekannter schaltender Taster verwendet werden, der im Bearbeitungsraum einer Werkzeugmaschine über die Kinematik 20 positioniert wird, um ein gefertigtes Werkstück durch taktiles Antasten zu vermessen.

Das Positionsmesssystem besteht im vorliegenden Ausführungsbeispiel aus mehreren räumlichen 2D-Winkelmesssystemen, wie sie z. B. aus der eingangs zitierten Druckschrift DE 10 2021 209 393 A1 grundsätzlich bekannt sind. Ergänzend sei an dieser Stelle noch auf die EP 3 739 287 A1 sowie die EP 3 175 949 A1 hingewiesen, die jeweils die Anwendung derartiger 2D-Winkelmessysteme in speziellen optischen Positionsmesssystemen zeigen. Auf den Offenbarungsgehalt dieser Druckschriften und die darin enthaltenen Informationen zu Details derartiger 2D-Winkelmesssysteme wird hiermit ausdrücklich Bezug genommen.

Das entsprechende Positionsmesssystem umfasst zur Posenbestimmung einerseits mehrere am Messkopf 10 angeordnete, identifizierbare Lichtquellen 31.1 - 31.6. Im dargestellten Beispiel sind insgesamt acht Lichtquellen 31.1 - 31.6 am Messkopf 10 vorgesehen, die paarweise um 90° versetzt um den Messkopf 10 angeordnet sind und von denen in der Figur lediglich sechs Lichtquellen 31.1 - 31.6 erkennbar sind. Andererseits umfasst das Positionsmesssystem mehrere erfindungsgemäße optische Empfangseinheiten 40.1, 40.2, die gegenüber den beweglichen Lichtquellen 31.1 - 31.6 am Messkopf 10 stationär angeordnet sind. Im dargestellten Ausführungsbeispiel sind lediglich zwei derartige optische Empfangseinheiten 40.1, 40.2 vorgesehen. Selbstverständlich können auch mehr derartige Einheiten in einem solchen Positionsmesssystem zum Einsatz kommen; ebenso kann die Zahl der verwendeten Lichtquellen variieren. Die optischen Empfangseinheiten 40.1, 40.2 sind an geeigneten stationären Objekten angeordnet, beispielsweise an einem - nicht in der Figur gezeigten - Maschinenrahmen.

Mit Hilfe der nachfolgend noch im Detail zu erläuternden optischen Empfangseinheiten 40.1, 40.2 kann jeweils für die entsprechende Empfangseinheit 40.1, 40.2 die Einfallsrichtung des von einer Lichtquelle 31.1 - 31.6 kommenden Lichtstrahls bzw. die Winkellage einer gemessenen Lichtquelle 31.1 - 31.6 erfasst werden. Ist zudem die Relativposition der beiden stationären Empfangseinheiten 40.1, 40.2 zueinander bekannt, so kann aus dem Schnittpunkt der bestimmten Einfallsrichtungen bzw. Sichtlinien zu den Lichtquellen 31.1 - 31.6 die Pose des Messkopfs 10 bestimmt werden. Hierzu werden die in den optischen Empfangseinheiten 40.1, 40.2 erzeugten Signale über eine Signalverarbeitungseinheit 50 aufbereitet und an eine Posenberechnungseinheit 60 übergeben, die daraus die räumliche Position und Orientierung bzw. Pose des Messkopfs 10 bestimmt. Diese Informationen können dann von einer Maschinensteuerung 70 genutzt werden, um den Messkopf 10 über die Kinematik 20 geeignet im Raum zu positionieren.

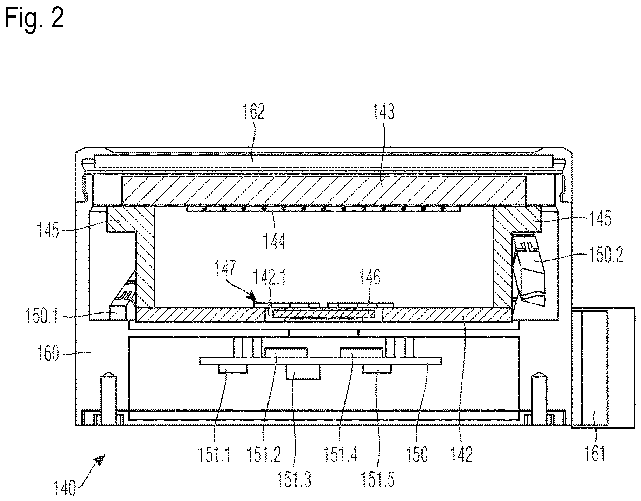

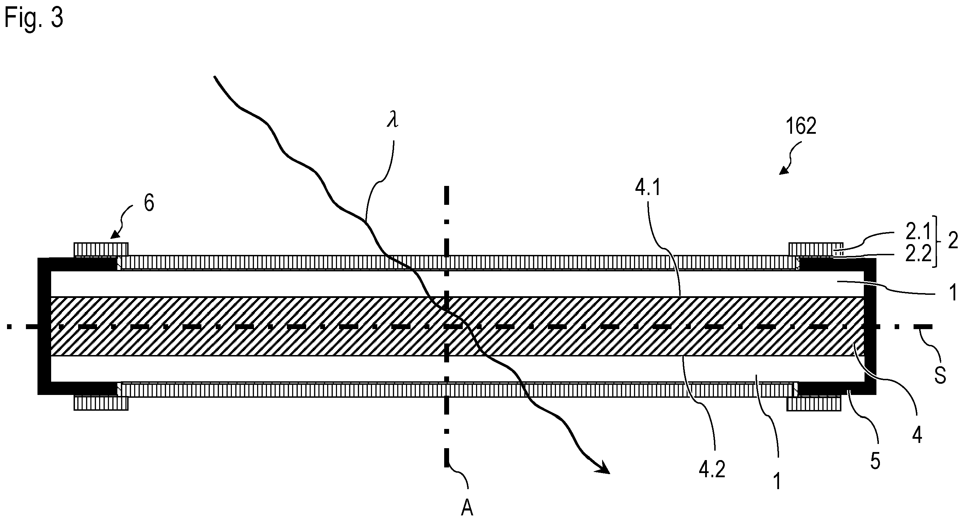

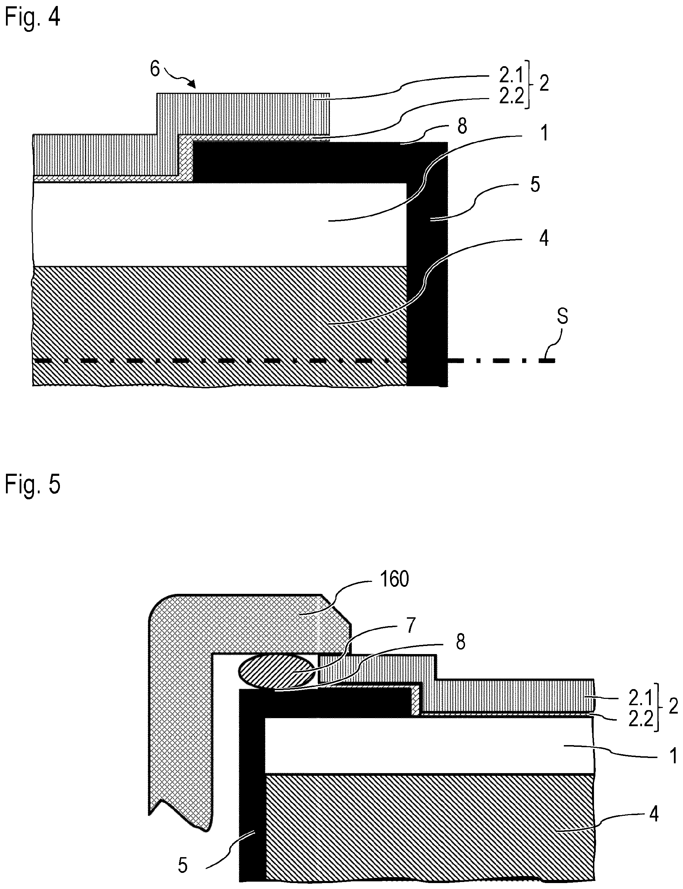

Anhand der weiteren Figuren wird nachfolgend ein Ausführungsbeispiel einer erfindungsgemäßen optischen Empfangseinheit 140 im Detail erläutert. Hierbei zeigt Fig. 2 eine Schnittansicht der Empfangseinheit 140 mit einer Messzelle 141, einem Montagegehäuse 160 und einem transparenten Abdeckelement 162; Fig. 3 eine Schnittansicht des Abdeckelements 162 der Messzelle 141 der Empfangseinheit 140 sowie die Fig. 4 und Fig. 5 Detailansichten des Abdeckelements 162.

Als maßgebliches funktionales Element weist die Empfangseinheit 140 eine in einem Montagegehäuse 160 angeordnete Messzelle 141 auf, deren Einzelkomponenten in Fig. 2 schraffiert hervorgehoben sind. Die Messzelle 141 und das Montagegehäuse 160 sind jeweils zylinderförmig ausgebildet, wobei die Messzelle 141 geeignet kinematisch gelagert im Inneren des Montagegehäuses 160 angeordnet sein kann. Oberhalb der Messzelle 141 weist das Montagegehäuse 160 ein für eine Messwellenlänge λ transparentes Abdeckelement 162 auf, das im Wesentlichen zum Schutz der empfindlichen Messzelle 141 dient; zur geeigneten Ausbildung des Abdeckelements 162 in der erfindungsgemäßen optischen Empfangseinheit 140 sei auf die nachfolgende Beschreibung verwiesen. Über das Montagegehäuse 160 kann die Empfangseinheit 140 lösbar an einem Objekt befestigt werden; hierzu sind am äußeren Umfang des Montagegehäuses 160 ein oder mehrere zylindrische Bohrungen 161 vorgesehen, über die es mittels Schraubverbindungen am stationären Objekt befestigbar ist.

Die Messzelle 141 umfasst im Wesentlichen eine Bodenplatte 142, eine transparente Deckplatte 143 mit einem Abtastgitter 144, ein oder mehrere Abstandshalter 145 zwischen der Bodenplatte 142 und der Deckplatte 143 sowie einen optoelektronischen Detektor 146; dessen lichtempfindliche Fläche ist in Richtung der Deckplatte 143 bzw. des Abtastgitters 144 orientiert. Das in Fig. 2 lediglich schematisiert angedeutete Abtastgitter 144 ist auf derjenigen Seite der transparenten Deckplatte 143 angeordnet, die in Richtung des Detektors 146 orientiert ist.

Die Bodenplatte 142, der Abstandshalter 145 sowie die Deckplatte 143 der Messzelle 141 bestehen jeweils aus dem gleichen Material, das vorzugsweise einen möglichst kleinen thermischen Ausdehnungskoeffizienten besitzt. Im vorliegenden Beispiel wird Quarzglas als Material für diese Messzellen-Komponenten gewählt; alternativ wären auch andere Materialien geeignet, z. B. BK7-Glas. Darüber resultiert zum einen ein sehr steifer Aufbau der Messzelle 141; zum anderen ist über die identischen Materialien der verschiedenen Komponenten eine hohe thermische Invarianz der über die Messzelle 141 zu erfassenden Messgrößen gewährleistet, d. h. es ist darüber eine gewisse Stabilität gegenüber thermischen Einflüssen sichergestellt. Dies bedeutet, dass z. B. im Fall einer gleichmäßigen Temperaturerhöhung aufgrund der identischen thermischen Ausdehnungskoeffizienten aller Messzellen-Komponenten der Abstand zwischen dem Detektor 146 und dem Abtastgitter 144 sich in gleicher Weise vergrößert, wie sich das an der Deckplatte 143 angeordnete Abtastgitter 144 ausdehnt und dabei seine Gitterkonstante vergrößert. Auf diese Art und Weise bleibt auch bei Temperaturänderungen die über die Empfangseinheit 140 bestimmte Winkellage einer Lichtquelle in Bezug auf die Empfangseinheit 140 unverändert.

Mit Hilfe des optoelektronischen Detektors 146 wird ein in der Detektionsebene resultierendes periodisches Streifenmuster erfasst. Dieses entsteht aus der Wechselwirkung der von einer Lichtquelle emittierten Strahlenbündel mit dem Abtastgitter 144. Die Lage des Streifenmusters auf dem Detektor 146 hängt von der Einfallsrichtung der Strahlung der gemessenen Lichtquelle relativ zur Empfangseinheit 140 ab, so dass sich aus der Lage des Streifenmusters in der Detektionsebene die Winkellage der Lichtquelle bestimmen lässt. Bevorzugt ist das Abtastgitter 144 der Empfangseinheit 140 als zweidimensionales Kreuzgitter und der optoelektronische Detektor 146 als zweidimensionaler Detektor ausgeführt, der spalten- und zeilenweise angeordnete optoelektronische Detektorelemente aufweist.

Damit können aus der Lage des erzeugten zweidimensionalen Streifenmusters auf dem Detektor 146 zwei Einfallswinkel bestimmt werden, welche zu den Hauptrichtungen des zweidimensionalen Abtastgitters 144 ausgerichtet sind. Das heißt, über die Auswertung der Streifenmusterlage auf dem Detektor 146 kann messtechnisch für die entsprechende Empfangseinheit 140 die Einfallsrichtung des von der jeweiligen Lichtquelle kommenden Lichtstrahls bzw. die Winkellage der gemessenen Lichtquelle erfasst werden. Aus diesem Grund wird im Zusammenhang mit der entsprechenden Positionserfassungseinrichtung auch von einem räumlichen 2D-Winkelmesssystem gesprochen.

Zur Weiterverarbeitung der über den Detektor 146 erzeugten Signale sind auf einer Platine 150 unterhalb der Bodenplatte 142 der Messzelle 141 mehrere Signalverarbeitungsbausteine 151.1 - 151.5 in der optischen Empfangseinheit 140 angeordnet. Hierbei kann es sich z. B. um Verstärker-, A/D-Wandler- oder Leitungstreiber-Bausteine handeln.

Um die eingangs erwähnten störenden Einflüsse auf die optische Empfangseinheit 140 zu vermeiden, ist vorgesehen, das Abdeckelement 162 elektrisch leitend an das Montagegehäuse 160 der Messzelle 141 anzubinden. Das Abdeckelement 162 verfügt hierfür über eine erfindungsgemäße Ausgestaltung mit mehreren Schichten, darunter mindestens eine elektrisch leitfähige Leitschicht, die für die bei der Messung verwendete Wellenlänge transparent ist; zu weiteren Details diesbezüglich sei auf die nachfolgende Beschreibung der Figuren 3 bis 5 verwiesen. Auf diese Art und Weise ist das Innere der Messzelle 141 vollständig von einer elektrisch leitfähigen Hülle, bestehend aus Montagegehäuse 160 und Leitschicht 1, umgeben, die als Faraday'scher Käfig wirkt; über diesen lässt sich das Messzellen-Innere zuverlässig gegenüber störenden, äußeren elektromagnetischen Feldern abschirmen. Insbesondere für den optoelektronischen Detektor 146 kann auf diese Art und Weise eine hohe elektromagnetische Verträglichkeit (EMV) sichergestellt werden. Der Einsatz der erfindungsgemäßen optischen Empfangseinheit 140 ist damit auch in Umgebungen mit größeren elektromagnetischen Feldern möglich, beispielsweise im Arbeitsraum einer Werkzeugmaschine.

Neben der Leitschicht 1 weist das Abdeckelement 162 der erfindungsgemäßen optischen Empfangseinheit 140 noch mindestens eine Antireflexschicht 2 auf. Diese ist derart ausgebildet, dass bei der für die Messung verwendeten Wellenlänge ein Reflexminimum sowie eine maximale Transmission resultiert. Gelangt z. B. elektromagnetische Strahlung mit der Messwellenlänge λ im Innenraum der Messzelle 141 auf die Antireflexschicht des Abdeckelements 162, so wird diese nicht zum Detektor 146 zurückreflektiert, sondern verlässt in Transmission durch das Abdeckelement 162 die Messzelle 141. Damit ist sichergestellt, dass kein signalverfälschendes Streulicht auf den optoelektronischen Detektor 146 gelangt. Das Signal-Rausch-Verhältnis der erzeugten Messsignale lässt sich auf diese Art und Weise signifikant optimieren.

Unter einem Reflexminimum ist ein minimaler Reflexionsgrad der durch das Abdeckelement 162 reflektierten elektromagnetischen Strahlung zu verstehen. Dieser Minimalwert kann ein lokales Minimum innerhalb eines bestimmten Wellenlängenbereichs der einfallenden elektromagnetischen Strahlung sein, z. B. zwischen 750 nm und 950 nm. Im vorliegenden Ausführungsbeispiel kann das Reflexminimum beispielsweise bei λ = 850 nm liegen. Nur für elektromagnetische Strahlung mit einer Wellenlänge von λ = 850 nm resultiert damit ein maximaler Transmissionsgrad durch die Gesamtheit aller Schichten 1, 2 inklusive dem Trägersubstrat 4. Mit Vorteil liegt der Reflexionsgrad im Reflexminimum bei einem Einstrahlwinkelbereich von 0° bis 50° bei unter 2 %, insbesondere unter 1 % und vorteilhafterweise unter 0,5 %.

Unter dem Einstrahlwinkel ist dabei der Innenwinkel zu verstehen, der zwischen einer einfallenden elektromagnetischen Welle und einer senkrecht zur Symmetrieebene S des Trägersubstrats 4 verlaufenden Achse A eingenommen wird.

Die Symmetrieebene S verläuft dabei mittig und parallel zu den Seitenflächen 4.1, 4.2 durch das Trägersubstrat 4. Ergänzend kann auch bezüglich der zur Symmetrieebene S senkrecht verlaufenden Achse A eine Rotationssymmetrie vorliegen.

Im dargestellten Ausführungsbeispiel der erfindungsgemäßen optischen Empfangseinheit besteht das Abdeckelement 162, das in Fig. 3 in einer Schnittansicht gezeigt ist, aus einem planaren Trägersubstrat 4 mit gegenüberliegenden Seitenflächen 4.1, 4.2, wobei auf beiden der gegenüberliegenden Seitenflächen 4.1, 4.2 jeweils eine Leitschicht 1 und eine Antireflexschicht 2 flächig aufgetragen sind. Als Trägersubstrat kann z. B. eine Filterglasscheibe mit einer Dicke im Bereich zwischen 0,7 mm bis 7 mm verwendet werden, die lediglich für Wellenlängen größer als 780 nm transparent ausgebildet ist. Die Schichten 1, 2 auf den gegenüberliegenden Seitenflächen 4.1, 4.2 sind dabei jeweils derart ausgebildet, dass die Leitschicht 1 zwischen dem Trägersubstrat 4 und der Antireflexschicht 2 angeordnet ist.

Die Leitschicht 1 wird beispielsweise mittels eines Dünnschicht-Verfahrens auf dem Trägersubstrat 4 aufgebracht, beispielsweise durch einen geeigneten Sputter-Prozess. Als Material wird für die Leitschicht 1 vorzugsweise ein elektrisch leitfähiges Oxid (TCO) genutzt, das bezüglich der für die Messung genutzten elektromagnetischen Strahlung transparent ist. Als geeignetes elektrisch leitfähiges Oxid ist im vorliegenden Beispiel aluminiumdotiertes Zinkoxid (ZnO:Al) mit einer Schichtdicke von etwa 100 nm und einem spezifischen Widerstand von 5 · 10⁻⁶ Ω·m bis 6 · 10⁻⁶ Ω·m. vorgesehen; alternativ wäre etwa auch Indiumzinnoxid (ITO) geeignet.

Die über der Leitschicht 1 angeordnete Antireflexschicht 2 umfasst im dargestellten Beispiel eine erste Teilschicht 2.1, bestehend aus Siliziumdioxid (SiO₂) mit einer Schichtdicke von etwa 190 nm, und eine zweite Teilschicht 2.2, bestehend aus Silizium (Si) mit einer Schichtdicke von etwa 4 nm; alternativ könnte für die zweite Teilschicht 2.1 auch Tantalpentoxid (Ta₂O₅) verwendet werden.

Im seitlichen Bereich des Abdeckelements 162 ist ein Kontaktierungselement 5 vorgesehen, welches um das Abdeckelement 162 umlaufend ausgebildet ist und eine elektrisch leitende Verbindung zwischen der Leitschicht 1 der ersten Seitenfläche 4.1 und der Leitschicht 1 der zweiten Seitenfläche 4.1 ermöglicht. Teilbereiche des Kontaktierungselements 5 sind dabei derart in den Schichtstapel des Abdeckelements 162 integriert, dass diese zwischen der Leitschicht 1 und der Antireflexschicht 2 liegen. Hierdurch wird zwischen der Antireflexschicht 2 und dem Kontaktierungselement 5 eine Kontaktierungszone ausgebildet, wobei diese flächenmäßig derart beschaffen ist, dass eine ausreichende elektrische Leitfähigkeit ausgebildet wird und die Leitschicht 1 gleichzeitig in diesem Bereich vor Korrosion geschützt ist. Konkret bedeutet dies, dass die Leitschicht 1 unter der Antireflexschicht 2 und seitlich durch das Kontaktierungselement 5 "vergraben" bzw. gekapselt ist. Die Leitschicht 1 ist somit auch bei einem Einsatz der erfindungsgemäßen optischen Empfangseinheit feuchten Umgebungen zuverlässig vor Korrosion geschützt.

Das Kontaktierungselement 5 kann aus mehreren gestapelten Teilschichten aus gleichen oder unterschiedlichen Metallen ausgebildet sein. Insbesondere eignen sich hierzu elektrisch leitende Metalle, die auch gegen Umwelteinflüsse widerstandsfähig sind. Das Kontaktierungselement 5 kann insbesondere in Form eines bondbaren Aluminium-Titan-Gold-Stapels (AlTiAu) ausgebildet sein. Dabei können alle Teilschichten eines Stapels mit einer identischen Schichtdicke oder jeweils mit einer unterschiedlichen Schichtdicke ausgebildet sein.

Alternativ kann das Kontaktierungselement 5 auch in Form einer bondbaren Aluminium-Chrom-Legierung (AlCr) ausgebildet sein.

Bevorzugt erstreckt sich die Leitschicht 1 über die gesamte Oberfläche der ersten und zweiten Seitenfläche 4.1, 4.2 des Trägersubstrats 4 und wird wie bereits erwähnt direkt auf diesem über ein Dünnschicht-Verfahren aufgebracht. Das Kontaktierungselement 5 wird anschließend z. B. durch Sputtern auf der Leitschicht 1 aufgebracht, so dass ein elektrisch leitender Kontakt im Randbereich des Trägersubstrats 4 bzw. des Abdeckelements 162 ausgebildet wird.

Im vorliegenden Ausführungsbeispiel wird zur Messung elektromagnetische Strahlung mit der Wellenlänge λ = 850 nm verwendet. Für einen Einstrahlwinkel zwischen 20° bis 50° resultiert bei dieser Wellenlänge bzw. in einem definierten Bereich um diese Wellenlänge ein Reflexminimum, sowohl für die Leitschicht 1 als auch für die zweiteilige Antireflexschicht 2, wodurch eine maximale Transmission durch die Leitschicht 1 und die zweiteilige Antireflexschicht 2 ermöglicht wird.

Im Rahmen der vorliegenden Erfindung ist es möglich, die elektrische Leitfähigkeit bzw. den Widerstand der Leitschicht 1 je nach Anforderung flexibel einzustellen. Dies erfolgt durch die geeignete Wahl der Schichtdicke der Leitschicht 1. An die gewählte Schichtdicke der Leitschicht 1 ist dann bei der Auslegung des Schichtstapel-Gesamtsystems die Schichtdicke der darüber angeordneten Antireflexschicht 2 anzupassen, um die gewünschten Reflexions- und Transmissionseigenschaften dieser Schicht sicherzustellen.

Beispielsweise kann es nötig sein, dass in Umgebungen mit besonders störenden elektromagnetischen Feldern die Leitschicht 1 eine höhere Leitfähigkeit und somit eine höhere Schichtdicke aufweisen muss, um eine zuverlässige Abschirmung des Messzellen-Innenraums sicherzustellen. Dementsprechend würde in diesem Fall auch die Schichtdicke der Antireflexschicht 2 angepasst werden, so dass weiterhin ein ausgeprägtes Reflexminimum für die bei der Messung verwendete Wellenlänge λ gegeben ist.

Wie aus Figur 3 ersichtlich, ist ein symmetrischer Aufbau des Abdeckelements 162 bezüglich einer mittig und parallel zu den Seitenflächen 4.1, 4.2 durch das Trägersubstrat 4 verlaufenden Symmetrieebene S vorgesehen. Dieser Aufbau gewährleistet zum einen eine Reflexminimierung bei der für die Messung genutzten Wellenlänge λ sowohl gegenüber dem Außenraum als auch im Innenraum der Messzelle 141. Zum anderen ist durch den symmetrischen Aufbau eine verzugsfreie Ausbildung des Abdeckelement 162 sichergestellt; damit können signalverfälschende optische Verzerrungen vermieden werden. Neben der bereits erwähnten Symmetrie des Abdeckelements 162 bezüglich der Symmetrieebene S kann zusätzlich eine Rotationssymmetrie bezüglich der Achse A vorliegen, die senkrecht zur Symmetrieebene S orientiert ist und durch den Mittelpunkt des kreisförmigen Abdeckelements 162 verläuft.

Wie Fig. 4 zu entnehmen ist, ist ein Teilbereich des Kontaktierungselements 5 derart ausgebildet, dass dieser sich über den Randbereich hinaus und parallel zur Leitschicht 1 erstreckt. Der parallele Verlauf des Teilbereichs des Kontaktierungselements 5 ist dabei auf einige Millimeter beschränkt, so dass nur in der Nähe des Randbereichs eine Kontaktierungszone ausgebildet wird. Die auf der Leitschicht 1 aufgetragene Antireflexschicht 2 erstreckt sich über die gesamte verbleibende Oberfläche der Leitschicht 1 und bildet einen Überlappungsbereich 6 mit dem Kontaktierungselement 5 aus. Im Überlappungsbereich 6 erstreckt sich die Antireflexschicht 2 über den Teilbereich des Kontaktierungselements 5. Die Antireflexschicht 2 kann dabei den gesamten Teilbereich des Kontaktierungselements 5 bedecken (nicht dargestellt), bevorzugt bedeckt diese jedoch den Teilbereich des Kontaktierungselements 5 nicht komplett, so dass eine Freifläche 8 verbleibt (siehe Fig. 4).

Das Abdeckelement 162 ist über einen elektrisch leitende Klebe- oder Lötverbindung elektrisch leitend an das Montagegehäuse 160 angebunden, wie in Fig. 5 schematisch gezeigt ist. Bevorzugt erfolgt die Anbindung dabei über die Freifläche 8 des Kontaktierungselements 5. Alternativ kann jedoch eine beliebige andere Fläche des Kontaktierungselements 5 genutzt werden. Im Fall einer Klebeverbindung eignet sich insbesondere ein Leitkleber, welcher abschnittsweise oder durchgängig zwischen dem Kontaktierungselement 5 und dem Montagegehäuse angeordnet sein kann.

## Patentansprüche

1. Optische Empfangseinheit für ein Positionsmesssystem zur Bestimmung räumlicher Positionsinformationen, wobei die Empfangseinheit eine Messzelle aufweist, die ein Abtastgitter und einen optoelektronischen Detektor umfasst, dessen lichtempfindliche Fläche in Richtung des Abtastgitters orientiert ist,
wobei die Messzelle in einem Montagegehäuse angeordnet ist, welches im Bereich des Abtastgitters ein für eine Messwellenlänge transparentes Abdeckelement aufweist,
wobei das Abdeckelement ein Trägersubstrat mit gegenüberliegenden Seitenflächen umfasst,
wobei das Abdeckelement mindestens eine Leitschicht umfasst, die elektrisch leitend an das Montagegehäuse angebunden ist,
**dadurch gekennzeichnet, dass**
das Abdeckelement (162) mindestens eine Antireflexschicht (2) aufweist,
wobei die Leitschicht (1) zwischen dem Trägersubstrat (4) und der Antireflexschicht (2) angeordnet ist.

2. Optische Empfangseinheit nach Anspruch 1, **dadurch gekennzeichnet, dass** auf beiden Seitenflächen (4.1, 4.2) zumindest eine Leitschicht (1) und zumindest eine Antireflexschicht (2) flächig aufgetragen sind.

3. Optische Empfangseinheit nach Anspruch 2, **dadurch gekennzeichnet, dass** über ein Kontaktierungselement (5) eine leitende Verbindung zwischen der Leitschicht (1) der ersten Seitenfläche (4.1) und der Leitschicht (1) der zweiten Seitenfläche (4.2) besteht.

4. Optische Empfangseinheit nach zumindest einem der Ansprüche 1 bis 3 **dadurch gekennzeichnet, dass** die Leitschicht (1) als elektrisch leitfähige Oxid (TCO) ausgebildet ist, das bezüglich der für die Messung genutzten elektromagnetischen Strahlung transparent ist.

5. Optische Empfangseinheit nach Anspruch 4, **dadurch gekennzeichnet, dass** das elektrisch leitfähige Oxid aluminiumdotiertes Zinkoxid (ZnO:Al) oder Indiumzinnoxid (ITO) ist.

6. Optische Empfangseinheit nach zumindest einem der vorhergehenden Ansprüche, **dadurch gekennzeichnet, dass** die Antireflexschicht (2) zumindest eine erste und zweite Teilschicht (2.1, 2.2) umfasst, wobei
• die erste Teilschicht (2.1) Siliziumdioxid (SiO₂) umfasst und
• die zweite Teilschicht (2.2) Silizium (Si) oder Tantalpentoxid (Ta₂O₅) umfasst.

7. Optische Empfangseinheit nach zumindest einem der Ansprüche 3 bis 6, **dadurch gekennzeichnet, dass** das Abdeckelement (162) derart ausgebildet ist, dass zumindest ein Teilabschnitt des Kontaktierungselements (5) zwischen der Leitschicht (1) und der Antireflexschicht (2) angeordnet ist.

8. Optische Empfangseinheit nach zumindest einem der vorhergehenden Ansprüche, **dadurch gekennzeichnet, dass** die Schichtdicken der Leitschicht (1) und/oder der Antireflexschicht (2) derart ausgebildet sind, dass bezüglich der für die Messung genutzten elektromagnetischen Strahlung ein Reflexminimum sowie eine maximale Transmission für Einstrahlwinkel zwischen 0° bis 50°, bezüglich einer senkrecht zu einer Symmetrieebene (S) des Trägersubstrats (4) verlaufenden Achse (A), resultiert.

9. Optische Empfangseinheit nach zumindest einem der vorhergehenden Ansprüche, **dadurch gekennzeichnet, dass** die Leitschicht (1) direkt auf dem Trägersubstrat (4) aufgetragen ist.

10. Optische Empfangseinheit nach zumindest einem der Ansprüche 3 bis 9, **dadurch gekennzeichnet, dass** das Kontaktierungselement (5) umlaufend um das Abdeckelement (162) ausgebildet ist.

11. Optische Empfangseinheit nach zumindest einem der Ansprüche 3 bis 10, **dadurch gekennzeichnet, dass** das Kontaktierungselement (5) aus einer Aluminium-Chrom-Legierung (AlCr) oder einem Aluminium-Titan-Gold-Stapel (AlTiAu) besteht.

12. Optische Empfangseinheit nach einem der Ansprüche 3 bis 11,
**dadurch gekennzeichnet, dass** das Abdeckelement (162) über das Kontaktierungselement (5) an das Montagegehäuse (160) durch eine elektrisch leitfähige Kleb- oder Lötverbindung (7) angebunden ist.

13. Optische Empfangseinheit nach einem der vorhergehenden Ansprüche, **dadurch gekennzeichnet, dass** das Trägersubstrat (4) lediglich für Wellenlängen größer als 780 nm durchlässig ausgebildet ist.

14. Optische Empfangseinheit nach einem der vorhergehenden Ansprüche, **dadurch gekennzeichnet, dass** das Abdeckelement (162) hinsichtlich der Symmetrieebene (S) des Trägersubstrats (4) symmetrisch ausgebildet ist.

## Claims

1. Optical receiving unit for a position measuring system for determining spatial position information, where the receiving unit has a measurement cell which comprises a scanning grid and an optoelectronic detector, the light-sensitive surface of which is oriented in the direction of the scanning grid,
where the measurement cell is positioned in a mount housing having a cover element transparent to a measurement wavelength in the region of the scanning grid,
where the cover element comprises a carrier substrate with opposite side faces,
where the cover element comprises at least one conductive layer connected in an electrically conductive manner to the mount housing,
**characterized in that**
the cover element (162) has at least one antireflection layer (2),
where the conductive layer (1) is between the carrier substrate (4) and the antireflection layer (2).

2. Optical receiving unit according to Claim 1, **characterized in that** at least one conductive layer (1) and at least one antireflection layer (2) have been applied two-dimensionally to both side faces (4.1, 4.2).

3. Optical receiving unit according to Claim 2, **characterized in that** a conductive connection exists between the conductive layer (1) of the first side face (4.1) and the conductive layer (1) of the second side face (4.2) via a contacting element (5).

4. Optical receiving unit according to at least one of Claims 1 to 3, **characterized in that** the conductive layer (1) is in the form of an electrically conductive oxide (TCO) which is transparent with respect to the electromagnetic radiation used for the measurement.

5. Optical receiving unit according to Claim 4, **characterized in that** the electrically conductive oxide is aluminium-doped zinc oxide (ZnO:Al) or indium tin oxide (ITO).

6. Optical receiving unit according to at least one of the preceding claims, **characterized in that** the antireflection layer (2) comprises at least a first and second sublayer (2.1, 2.2),
where
• the first sublayer (2.1) comprises silicon dioxide (SiO₂) and
• the second sublayer (2.2) comprises silicon (Si) or tantalum pentoxide (Ta₂O₅).

7. Optical receiving unit according to at least one of Claims 3 to 6, **characterized in that** the cover element (162) is designed such that at least a subsection of the contacting element (5) is between the conductive layer (1) and the antireflection layer (2).

8. Optical receiving unit according to at least one of the preceding claims, **characterized in that** the layer thicknesses of the conductive layer (1) and/or of the antireflection layer (2), with respect to the electromagnetic radiation used for the measurement, are such as to result in a reflection minimum and a maximum transmission for angles of incidence between 0 and 50°, with respect to an axis (A) that runs perpendicular to a plane of symmetry (S) of the carrier substrate (4).

9. Optical receiving unit according to at least one of the preceding claims, **characterized in that** the conductive layer (1) has been applied directly to the carrier substrate (4).

10. Optical receiving unit according to at least one of Claims 3 to 9, **characterized in that** the contacting element (5) is in circumferential form around the cover element (162).

11. Optical receiving device according to at least one of Claims 3 to 10, **characterized in that** the contacting element (5) consists of an aluminium-chromium alloy (AlCr) or an aluminium-titanium-gold stack (AlTiAu).

12. Optical receiving unit according to any of Claims 3 to 11, **characterized in that** the cover element (162) is connected to the mount housing (160) via the contacting element (5) by an electrically conductive adhesive bond or solder bond (7).

13. Optical receiving unit according to any of the preceding claims, **characterized in that** the carrier substrate (4) is transmissive only for wavelengths greater than 780 nm.

14. Optical receiving unit according to any of the preceding claims, **characterized in that** the cover element (162) is symmetric with respect to the plane of symmetry (S) of the carrier substrate (4).

## Revendications

1. Unité de réception optique pour un système de mesure de position destiné à déterminer des informations de position spatiale, l'unité de réception possédant une cellule de mesure qui comprend un réseau de balayage et un détecteur optoélectronique dont la surface photosensible est orientée en direction du réseau de balayage,
la cellule de mesure étant disposée dans un boîtier de montage, lequel possède un élément de recouvrement transparent pour une longueur d'onde de mesure dans la zone du réseau de balayage,
l'élément de recouvrement comprenant un substrat porteur avec des faces latérales opposées,
l'élément de recouvrement comprenant au moins une couche conductrice qui est reliée de manière électriquement conductrice au boîtier de montage,
**caractérisée en ce que**
l'élément de recouvrement (162) possède au moins une couche antireflet (2),
la couche conductrice (1) étant disposée entre le substrat porteur (4) et la couche antireflet (2).

2. Unité de réception optique selon la revendication 1, **caractérisée en ce qu'**au moins une couche conductrice (1) et au moins une couche antireflet (2) sont appliquées de manière plane sur les deux surfaces latérales (4.1, 4.2).

3. Unité de réception optique selon la revendication 2, **caractérisée en ce qu'**il existe une liaison conductrice entre la couche conductrice (1) de la première surface latérale (4.1) et la couche conductrice (1) de la deuxième surface latérale (4.2) par l'intermédiaire d'un élément de mise en contact (5).

4. Unité de réception optique selon au moins l'une des revendications 1 à 3, **caractérisée en ce que** la couche conductrice (1) est réalisée sous la forme d'un oxyde électriquement conducteur (TCO) transparent vis-à-vis du rayonnement électromagnétique utilisé pour la mesure.

5. Unité de réception optique selon la revendication 4, **caractérisée en ce que** l'oxyde électriquement conducteur est de l'oxyde de zinc dopé à l'aluminium (ZnO:Al) ou de l'oxyde d'indium-étain (ITO).

6. Unité de réception optique selon au moins l'une des revendications précédentes, **caractérisée en ce que** la couche antireflet (2) comprend au moins une première et une deuxième couche partielle (2.1, 2.2),
• la première sous-couche (2.1) comprenant du dioxyde de silicium (SiO₂) et
• la deuxième sous-couche (2.2) comprenant du silicium (Si) ou du pentoxyde de tantale (Ta₂O₅).

7. Unité de réception optique selon au moins l'une des revendications 3 à 6, **caractérisée en ce que** l'élément de recouvrement (162) est configuré de telle sorte qu'au moins une portion partielle de l'élément de mise en contact (5) est disposée entre la couche conductrice (1) et la couche antireflet (2).

8. Unité de réception optique selon au moins l'une des revendications précédentes, **caractérisée en ce que** les épaisseurs de couche de la couche conductrice (1) et/ou de la couche antireflet (2) sont configurées de telle sorte que, vis-à-vis du rayonnement électromagnétique utilisé pour la mesure, il en résulte une réflexion minimale ainsi qu'une transmission maximale pour des angles d'incidence compris entre 0° et 50°, par rapport à un axe (A) qui suit un tracé perpendiculaire à un plan de symétrie (S) du substrat porteur (4).

9. Unité de réception optique selon au moins l'une des revendications précédentes, **caractérisée en ce que** la couche conductrice (1) est appliquée directement sur le substrat porteur (4).

10. Unité de réception optique selon au moins l'une des revendications 3 à 9, **caractérisée en ce que** l'élément de mise en contact (5) est de configuration circonférentielle autour de l'élément de recouvrement (162).

11. Dispositif de réception optique selon au moins l'une des revendications 3 à 10, **caractérisé en ce que** l'élément de mise en contact (5) est constitué d'un alliage aluminium-chrome (AlCr) ou d'un empilement aluminium-titane-or (AlTiAu).

12. Unité de réception optique selon l'une des revendications 3 à 11, **caractérisée en ce que** l'élément de recouvrement (162) est relié au boîtier de montage (160) par l'intermédiaire de l'élément de mise en contact (5) par une liaison adhésive ou brasée (7) électriquement conductrice.

13. Unité de réception optique selon l'une des revendications précédentes, **caractérisée en ce que** le substrat porteur (4) est configuré transparent uniquement pour des longueurs d'onde supérieures à 780 nm.

14. Unité de réception optique selon l'une des revendications précédentes, **caractérisée en ce que** l'élément de recouvrement (162) est configuré symétriquement du point de vue du plan de symétrie (S) du substrat porteur (4).
